# EUROPEAN PATENT APPLICATION

(11) **EP 2 677 760 A1**
(43) Date of publication of application: **25.12.2013**
(21) Application number: 13153231.9
(22) Date of filing: 30.01.2013
(51) Int. Cl.: H04N 21/4367, G06F 3/14, G09G 5/00

(54) **Information transmisison between an information processing device and an external device**

(30) Priority: 22.06.2012 JP 2012141372
(71) Applicant: Kabushiki Kaisha Toshiba, Tokyo 105-8001 (JP)
(72) Inventor: Yano, Takehide, Tokyo, 105-8001 (JP)
(74) Representative: HOFFMANN EITLE

(57) **Abstract**

An information processing device (100), e.g. a digital TV or a recorder, includes a display controller (102), a transmitter (105) and a prohibition module (106). The display controller (102) is configured to display a screen comprising input regions, e.g. text boxes, on a display to which information is capable of being input. The transmitter (105) is configured to transmit information, input to at least one of the text boxes, to an external device (200, 300), e.g. a smart phone or a remote controller. The prohibition module (106) is configured to acquire attribute information of the text box, indicating display or non-display of the information in the text box, for each of the text boxes and to prohibit, when the attribute information of the text box to which transmission objects of various kinds of information are input indicates the non-display of the information, transmission of the information to the external device (200, 300).

## Description

### FIELD

Embodiments described herein relate generally to an information processing device and an information processing method.

### BACKGROUND

It is possible to connect an information processing device such as a digital television or a recorder with an external device such as a smart phone and operate the information processing device from the external device. The operation of the information processing device from the external device is diversified and hence, it is possible to perform input operations for inputting a text prepared in the external device in addition to remote control operations such as channel switching, volume adjustments, or recording reservations. To be more specific, the input operation of the text prepared in the external device is performed by focusing a text box displayed on the information processing device and, at the same time, transmitting the text prepared in the external device to the information processing device. Furthermore, in the input operation of a text prepared in the external device, it is also possible to update, when the text has already been input in the text box focused, the text in the text box in accordance with the following procedures; that is, the text is transmitted to the external device, the text is edited in the external device, and the edited text is returned to the information processing device.

When the information processing device is connected with a plurality of external devices, it is possible to perform input operations of texts from a plurality of such external devices in parallel. However, to consider a case where the input operations of texts prepared in a plurality of such external devices are performed in a state that the information processing device is connected with a plurality of such external devices, when a text box to which a text is input by a first external device is focused by the input operation performed by a second external device, the text input by the first external device is transmitted to the second external device. Accordingly, when the text input to the text box is related to privacy such as a password, the text input by the first external device is transmitted to the second external device and this can lead to invasion of privacy or disclosure of individual information.

The present invention has been made under such circumferences, and it is an object of the present embodiments to provide an information processing device and an information processing method that are capable of suppressing the invasion of privacy and the disclosure of individual information when an information processing device is connected with a plurality of external devices and the input operations of texts to a text box displayed on the information processing device is performed.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic view illustrating the constitution of an information processing device according to a first embodiment;
FIG. 2 is an exemplary block diagram illustrating the constitution of the information processing device in the first embodiment;
FIG. 3 is an exemplary flowchart illustrating the flow of processing executed in the information processing device in the first embodiment;
FIG. 4 is an exemplary flowchart illustrating the flow of processing for transmitting various kinds of information input to a text box in the information processing device in the first embodiment;
FIG. 5 is an exemplary block diagram illustrating the constitution of an information processing device according to a second embodiment;
FIG. 6 is an exemplary block diagram illustrating the constitution of an information processing device according to an third embodiment; and
FIG. 7 is an exemplary block diagram illustrating the constitution of an information processing device according to a fourth embodiment.

### SUMMARY

To overcome the problems and achieve the object mentioned above, according to an embodiment, an information processing device comprises: a display controller configured to display a screen comprising input regions to which information is capable of being input, on a display; a transmitter configured to transmit the information input to at least one of the input regions to an external device; a prohibition module configured to acquire attribute information indicating display or non-display of the information in the input region for each of the input regions and prohibit, when the attribute information of the input region to which the information to be transmitted is input indicates the non-display of the information, transmission of the information to the external device.

According to another embodiment of the invention, an information processing method comprises: displaying a screen comprising input regions to which information is capable of being input, on a display; transmitting the information input to at least one of the input regions to an external device; and acquiring attribute information indicating display or non-display of the information in the input region for each of the input regions to prohibit, when the attribute information of the input region to which the information to be transmitted is input indicates the non-display of the information, transmission of the information to the external device.

### DETAILED DESCRIPTION

### First Embodiment

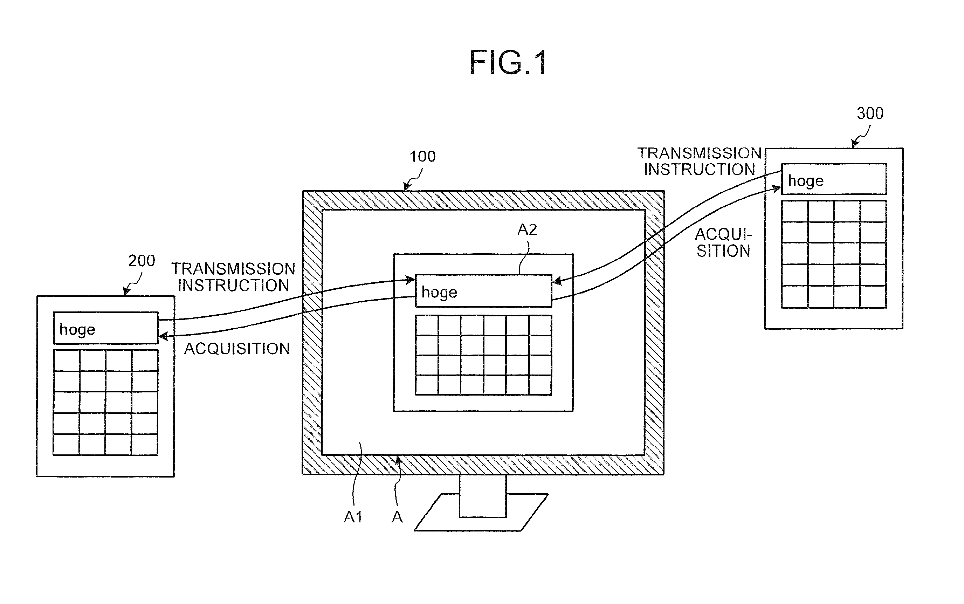

FIG. 1 is a schematic view illustrating the constitution of an information processing device according to a first embodiment. An information processing device 100 in the first embodiment comprises a graphical user interface (GUI) for accepting operations from a user. The information processing device 100 is a digital television that accepts operations from external devices 200 and 300 such as a smart phone or a tablet personal computer (PC) in addition to basic operations (a volume adjustment or channel switching, for example) from a remote controller.

To be more specific, the information processing device 100 comprises functions of displaying a screen A1 including a text box (display region) A2 to which various kinds of information ("hoge", for example) can be input on a display A (a liquid crystal display (LCD), for example), acquiring various kinds of information input in the external devices 200 and 300, and transmitting the various kinds of information input to the text box A2 in response to a transmission instruction from the external devices 200 and 300.

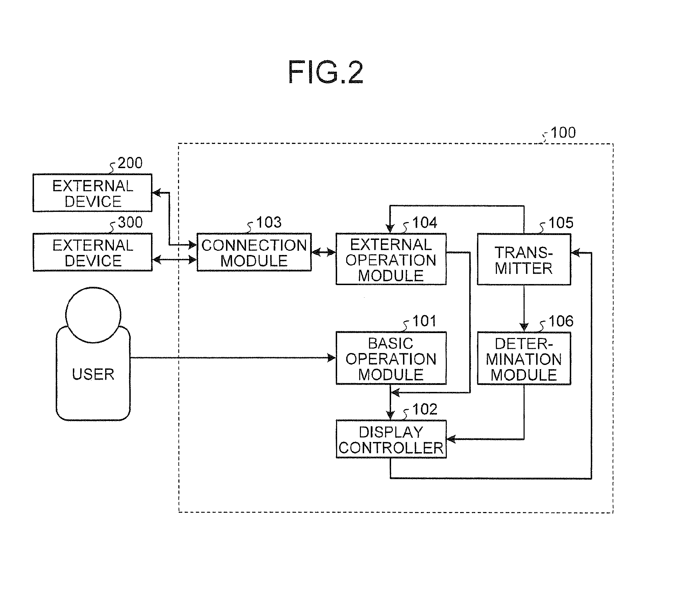

FIG. 2 is a block diagram illustrating the constitution of the information processing device in the first embodiment. The information processing device 100 in the first embodiment comprises a basic operation module 101, a display controller 102, a connection module 103, an external operation module 104, a transmitter 105, and a determination module 106.

The basic operation module 101 acquires processing information for instructing processing performed in the information processing device 100, such as the display of various kinds of information input to the text box A2 via a standard operation device (a remote controller, buttons integrated with the body of the information processing device 100, or the like) used for operating the information processing device 100, the transmission of various kinds of information input to the text box A2, the start-up of specific applications comprised in the information processing device 100, or the switchover of the conditions of the information processing device 100 (the power on/off of the information processing device 100, for example). Furthermore, the basic operation module 101 outputs the processing information acquired to the display controller 102. In the first embodiment, the standard operation device used for operating the information processing device 100, such as the remote controller (not illustrated in the drawings), is not notified of a result of processing executed in accordance with the processing information acquired.

The connection module 103 is connected with the external devices 200 and 300 via a wired local area network (LAN), a wireless LAN, a Bruetooth (registered trademark), a serial connection, or the like, and communicates with the external devices 200 and 300.

The external operation module 104 acquires processing information from the external devices 200 and 300 via the connection module 103. Furthermore, the external operation module 104 outputs the processing information acquired thereby to the display controller 102.

In the first embodiment, the external operation module 104 transmits and receives the processing information in a predetermined format to/from the external devices 200 and 300 by wired communication or wireless communication via the connection module 103. For example, the external operation module 104 acquires processing information including the kind of processing executed in the information processing device 100 and a text indicating the content of processing executed in the information processing device 100 via the connection module 103. Next, the external operation module 104 converts the processing information acquired thereby into a control signal such as a signal for instructing to display various kinds of information input in the text box A2, a signal for instructing to transmit various kinds of information input to the text box A2, a signal for instructing to start the specific application installed in the information processing device 100, or a signal for instructing to switch the condition of the information processing device 100. Furthermore, the external operation module 104 outputs the control signal converted thereby so as to instruct the execution of processing in accordance with the processing information acquired thereby.

Furthermore, the external operation module 104 can transmit any information to the external devices 200 and 300 via the connection module 103.

The display controller 102 executes processing such as the display of various kinds of information input in the text box A2, the transmission of various kinds of information input in the text box A2, the start-up of the specific application installed in the information processing device 100, or the switchover of the condition of the information processing device 100 in accordance with the processing information output from the basic operation module 101 or the external operation module 104. For example, the display controller 102 displays, when the processing information output from the basic operation module 101 or the external operation module 104 indicates an instruction for displaying various kinds of information input in the text box A2, the various kinds of information input in the text box A2.

In the first embodiment, the display controller 102 displays, for displaying the screen A1 including the text box A2, the screen A1 including operation buttons (not illustrated in the drawings) for inputting various kinds of information to the information processing device 100, such as a software keyboard capable of inputting various kinds of information, on the display A.

Furthermore, the display controller 102 focuses, when the screen A1 includes a plurality of text boxes A2, an input candidate's text box A2 to which various kinds of information are input, out of the text boxes A2. Furthermore, the display controller 102 focuses, when various kinds of information have been already input to the text box A2, the text box A2 to which the various kinds of information have been input.

In the first embodiment, the display controller 102 focuses the input candidate's text box A2 (or, the text box A2 to which various kinds of information to be transmitted are input). However, the display controller 102 may merely change the display mode of the text box A2. For example, the display controller 102 may also blink the text box A2, or display the text box A2 in a color different from the color of the other text boxes A2.

In addition, the display controller 102 detects the input candidate's text box A2 to which various kinds of information are input (or, the text box A2 to which various kinds of information to be transmitted has been input) based on a focus on the text box A2. The display controller 102 displays, when processing information output from the basic operation module 101 or the external operation module 104 indicates to display various kinds of information in the text box A2, the various kinds of information in the text box A2 focused. In this regard, the display controller 102 converts, when there exists a high possibility that the various kinds of information input to the text box A2 focused cause an invasion of privacy or disclosure of individual information, the various kinds of information input into information ("•••••", for example) other than the various kinds of information and displays the other information. Furthermore, the display controller 102 displays, when the various kinds of information input to the text box A2 focused indicate a low possibility of the invasion of privacy or the disclosure of individual information such as a password, the various kinds of information ("FOOBAR", for example) input as they are without converting the various kinds of information into other information other than the various kinds of information. On the other hand, the display controller 102 outputs, when the processing information output from the basic operation module 101 or the external operation module 104 instructs to transmit various kinds of information input, the various kinds of information input to the text box A2 focused to the transmitter 105.

The transmitter 105 transmits transmission objects; that is, various kinds of information input to the text box A2 focused, to the external devices 200 and 300 via the connection module 103 and the external operation module 104. In the first embodiment, the transmitter 105 transmits various kinds of information (various kinds of information input to the text box A2 focused out of the text boxes A2 included in the screen A1) output from the display controller 102 to the external devices 200 and 300.

The determination module 106 acquires attribute information indicating the display or the non-display of various kinds of information in the text box A2 for each text box A2 and, at the same time, the determination module 106 functions, when the attribute information of the text box A2 to which transmission objects of various kinds of information are input indicates the non-display of the various kinds of information, as a prohibition module for prohibiting the transmission of the various kinds of information to the external devices 200 and 300.

In the first embodiment, the determination module 106 acquires, when the text box A2 focused is an input region to which a password is input and various kinds of information input are displayed by being converted into information other than the various kinds of information such as "•••••", attribute information indicating the non-display of the various kinds of information, and prohibits to transmit the password input to the external devices 200 and 300. On the other hand, the determination module 106 acquires, when various kinds of information ("FOOBAR", for example) input to the text box A2 focused is displayed without being converted to information other than the various kinds of information, attribute information indicating the display of the various kinds of information, and permits to transmit the various kinds of information input to the external devices 200 and 300.

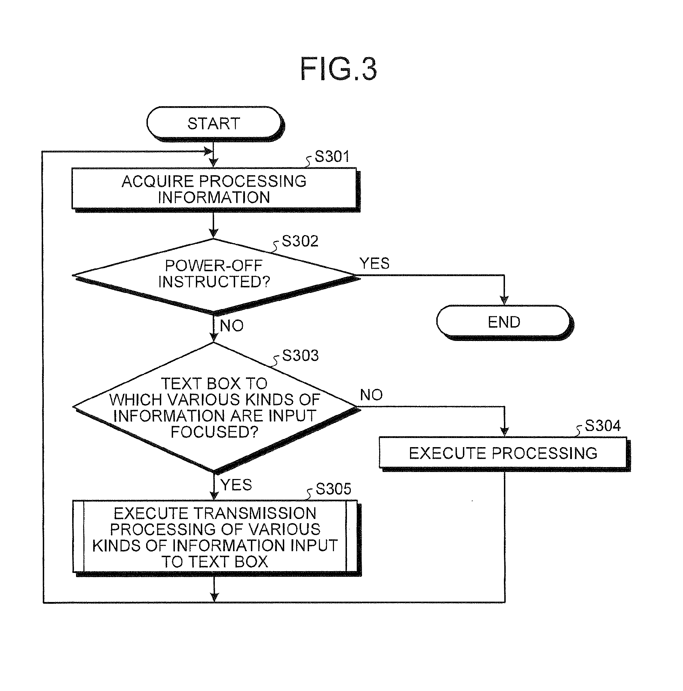

Next, in conjunction with FIG. 3, the flow of processing executed in the information processing device in the first embodiment is explained. FIG. 3 is a flowchart illustrating the flow of processing executed in the information processing device in the first embodiment.

The display controller 102 acquires processing information output from the basic operation module 101 or the external operation module 104 (S301). Next, the display controller 102 determines whether the processing information acquired thereby instructs to switch over the power supply of the information processing device 100 to an OFF-state (S302). Furthermore, when the display controller 102 determines that the processing information acquired instructs to switch over the power supply of the information processing device 100 to an OFF-state (Yes at S302), the display controller 102 brings the power supply of the information processing device 100 into an OFF-state.

On the other hand, when the processing information acquired does not instruct to switch over the power supply of the information processing device 100 to an OFF-state (No at S302), the display controller 102 determines whether the processing information acquired thereby instructs to transmit various kinds of information and any of the text boxes A2 to which the various kinds of information are input is focused (S303). When the condition that the processing information acquired instructs to transmit the various kinds of information and any of the text boxes A2 to which the various kinds of information are input is focused is not satisfied (No at S303); that is, when the processing information acquired does not instruct to transmit the various kinds of information or any of the text boxes A2 to which the various kinds of information are input is not focused, the display controller 102 executes processing in accordance with the processing information such as the display of the various kinds of information in the text box A2 or the start-up of a specific application installed in the information processing device 100 (S304).

Furthermore, when the processing information acquired instructs to transmit the various kinds of information and any of the text boxes A2 to which the various kinds of information are input is focused (Yes at S303), the transmitter 105 and the determination module 106 execute processing for transmitting the various kinds of information (the various kinds of information input to the text box A2 focused) output from the display controller 102 (S305).

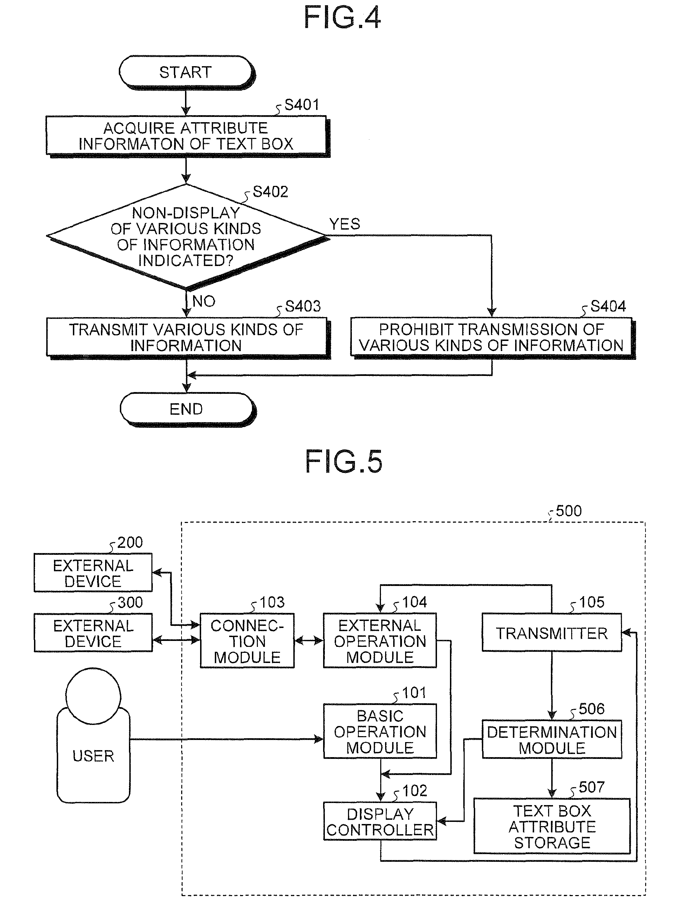

Here, in conjunction with FIG. 4, the flow of processing for transmitting various kinds of information input to the text box A2 is explained. FIG. 4 is a flowchart illustrating the flow of processing for transmitting various kinds of information input to the text box in the information processing device in the first embodiment.

When the processing information acquired instructs to transmit various kinds of information and any of the text boxes A2 in which the various kinds of information is displayed is focused (Yes at S303), the determination module 106 acquires the attribute information of the text box A2 focused (S401). Furthermore, the determination module 106 determines whether the attribute information acquired thereby indicates the non-display of the various kinds of information (S402).

When it is determined that the attribute information acquired indicates the display of the various kinds of information (No at S402), the transmitter 105 transmits the various kinds of information input to the text box A2 focused to the acquisition destination of the processing information (the external devices 200 and 300, for example) (S403). On the other hand, when the attribute information acquired indicates the non-display of the various kinds of information (Yes at S402), the determination module 106 prohibits the transmission of the various kinds of information input to the text box A2 focused (S404).

In this manner, according to the information processing device 100 in the first embodiment, when the attribute information indicating the display or the non-display of the various kinds of information in the text box A2 is acquired for each of the text boxes A2 and the attribute information of the text box A2 to which the various kinds of information to be transmitted are input indicates the non-display of the various kinds of information, the transmission of the various kinds of information to be transmitted to the external devices 200 and 300 is prohibited. Hence, when a text input to the text box A2 is related to privacy such as a password, the text input to the text box A2 is not transmitted to external devices thus suppressing the invasion of privacy or the disclosure of individual information when the input operation of a text to a text box displayed on the information processing device 100 is performed in a state that a plurality of such external devices 200 and 300 are connected with the information processing device 100.

### Second Embodiment

A second embodiment is an example in which an input region and attribute information indicating the display or the non-display of information in the input region are stored in a manner associated with each other, and whether the transmission of information to external devices is prohibited is determined in reference to the attribute information stored. In the following explanation, constitutions different from the case of the first embodiment are explained, and explanations with respect to constitutions identical with the case of the first embodiment are omitted.

FIG. 5 is a block diagram illustrating the constitution of an information processing device according to the second embodiment. An information processing device 500 in the second embodiment comprises the basic operation module 101, the display controller 102, the connection module 103, the external operation module 104, the transmitter 105, a determination module 506, and a text box attribute storage 507.

The text box attribute storage 507 stores therein the text box A2 (the input region) included in the screen A1 and attribute information indicating the display or the non-display of various kinds of information in the text box A2 in a manner associated with each other. The text box attribute storage 507 may collectively manage the attribute information of all the text boxes A2 displayable on the screen A1 by using a table or the like that stores therein each of the text boxes A2 displayable on the screen A1 and the attribute information in a manner associated with each other. The text box attribute storage 507 may store therein the attribute information for each of the text boxes A2 as information accompanied with the text box A2.

The determination module 506 acquires the attribute information stored in association with the text box A2 focused from the text box attribute storage 507. Furthermore, the determination module 506 prohibits, when the attribute information acquired from the text box attribute storage 507 indicates the non-display of information, the transmission of transmission objects; that is, various kinds of information input to the text box A2, to the external devices 200 and 300.

In this manner, the information processing device 500 in the second embodiment stores therein the text box A2 and the attribute information indicating the display or the non-display of the various kinds of information in the text box A2 in a manner associated with each other, and determines whether the transmission of the various kinds of information to the external devices 200 and 300 is prohibited in reference to the attribute information stored, thus obtaining the same effects as the case of the first embodiment.

### Third Embodiment

A third embodiment is an example in which a screen is displayed in accordance with a structured document including a tag indicating the attribute of an input region and attribute information is acquired based on the tag included in the structured document. In the following explanation, constitutions different from the case of the first embodiment are explained, and explanations with respect to constitutions identical with the case of the first embodiment are omitted.

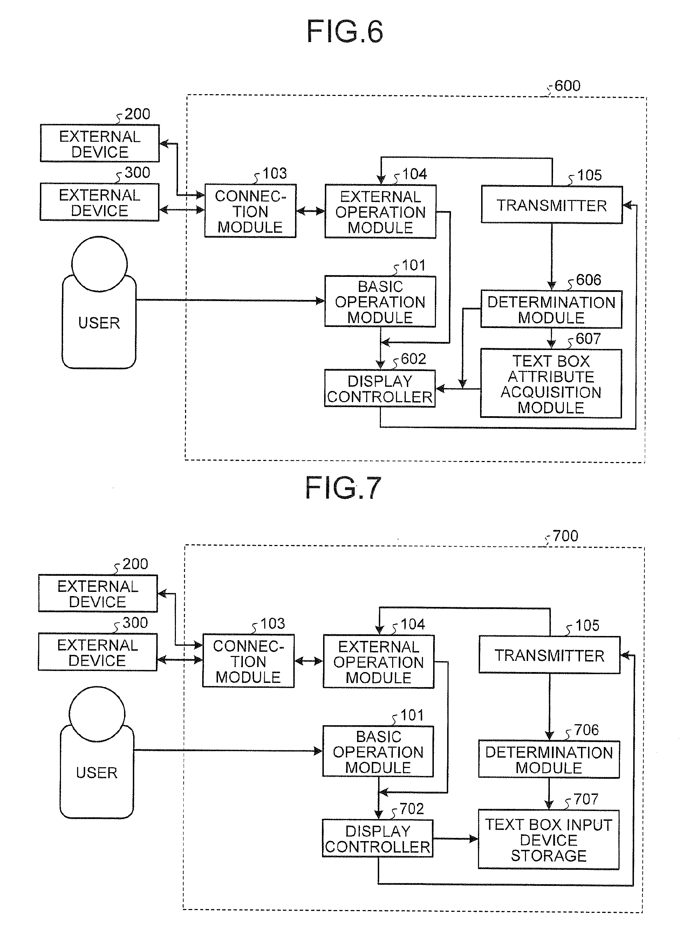

FIG. 6 is a block diagram illustrating the constitution of an information processing device according to the third embodiment. An information processing device 600 in the third embodiment comprises the basic operation module 101, a display controller 602, the connection module 103, the external operation module 104, the transmitter 105, a determination module 606, and a text box attribute acquisition module 607.

The display controller 602 displays the screen A1 on the display A in accordance with a structured document (a document described in a markup language such as a hyper text markup language (HTML)) including a tag indicating the attribute information of the text box A2. In other words, the display controller 602 displays the screen A1 on the display A in accordance with a structured document in which the display content of the screen A1 is described.

The text box attribute acquisition module 607 acquires attribute information based on a display content in the vicinity of the text box A2, the display content being described in the structured document. In the third embodiment, the text box attribute acquisition module 607 acquires, when the display content, which is described in the structured document, in the vicinity of the text box A2 (the text box A2 focused) includes information that leads to a possibility for the invasion of privacy or the disclosure of individual information such as "a password", attribute information indicating the non-display of various kinds of information input to the text box A2.

Furthermore, the text box attribute acquisition module 607 may acquire attribute information based on a tag included in a structured document. To be more specific, the text box attribute acquisition module 607 analyzes a tag included in a structured document to acquire the attribute information of the text box A2 focused. For example, the text box attribute acquisition module 607 acquires, when a tag included in a structured document is <INPUT size=oo type=password value=xx name=password> and the value of "type" is "password", attribute information indicating the non-display of various kinds of information input to the text box A2.

The determination module 606 prohibits, when the attribute information acquired from the text box attribute acquisition module 607 indicates the non-display of various kinds of information, the transmission of a transmission object; that is, the various kinds of information input to the text box A2, to the external devices 200 and 300. In the third embodiment, the text box attribute acquisition module 607 and the determination module 606 function as a prohibition module.

In this manner, the information processing device 600 in the third embodiment displays the screen A1 in accordance with a structured document including a tag indicating the attribute of the text box A2 and acquires attribute information based on the tag included in the structured document thus obtaining the same effect as the case of the first embodiment.

### Fourth Embodiment

A fourth embodiment is an example in which external device information for identifying an external device that inputs information for each input region to the input region is stored, and the prohibition of the transmission of information to the external device identified based on the external device information is cancelled. In the following explanation, constitutions different from the case of the first embodiment are explained, and explanations with respect to constitutions identical with the case of the first embodiment are omitted.

FIG. 7 is a block diagram illustrating the constitution of an information processing device according to the fourth embodiment. A information processing device 700 in the fourth embodiment comprises the basic operation module 101, a display controller 702, the connection module 103, the external operation module 104, the transmitter 105, a determination module 706, and a text box input device storage 707.

In the fourth embodiment, the basic operation module 101 and the external operation module 104 output, upon acquiring various kinds of information input to the text box A2 by the external devices 200, 300, or the like, external device information that identifies an external device (the external devices 200, 300, or the like) of an acquisition destination of the various kinds of information to the display controller 702 based on the various kinds of information acquired.

The display controller 702 stores therein, upon receiving various kinds of information input to the text box A2 focused from the basic operation module 101 and the external operation module 104, the text box A2 focused (that is, the text box A2 to which the various kinds of information are input) and the external device information output with the various kinds of information in a manner associated with each other, in the text box input device storage 707.

The text box input device storage 707 stores therein a text box A2 and external device information for identifying an external device (the external devices 200, 300, or the like) that has input various kinds of information to the text box A2 in a manner associated with each other. The text box input device storage 707 may collectively manage all the text boxes A2 displayable on the screen A1 by using a table storing therein each of the text boxes A2 and the external device information in a manner associated with each other. The text box input device storage 707 may store therein the external device information for each of the text boxes A2 as information accompanied with the text box A2.

The determination module 706 cancels the prohibition of the transmission of various kinds of information to an external device (the external device 200, for example) identified by external device information stored in the text box input device storage 707. In the fourth embodiment, the determination module 706 acquires external device information stored in association with the text box A2 focused from the text box input device storage 707, and cancels, when the external device identified based on the external device information acquired is an external device (the external device 200, for example) of the transmission destination of various kinds of information, the prohibition of the transmission of the various kinds of information to the external device of the transmission destination of the various kinds of information.

In the fourth embodiment, the determination module 706 prohibits, when the attribute information of a text box A2 to which various kinds of information is input indicates the non-display of the various kinds of information, the transmission of the various kinds of information to an external device other than an external device that has input the various kinds of information to the text box A2. For example, when an external device that has input various kinds of information is the external device 200, the determination module 706 prohibits the transmission of the various kinds of information to the external device 300, and permits the transmission of the various kinds of information to the external device 200. Here, the determination module 706 permits the transmission of the various kinds of information to the external device 200 since, even when the attribute information indicates the non-display of the various kinds of information and the various kinds of information lead to a high possibility for the invasion of privacy or the disclosure of individual information such as a password, the possibility to lead to the invasion of privacy or the disclosure of individual information is low when the external device that has input the various kinds of information to the text box A2 is the external device 200.

In this manner, the information processing device 700 in the fourth embodiment stores therein, for each of the text boxes A2, external device information identifying an external device that has input various kinds of information to the text box A2 and cancels the prohibition of the transmission of information to the external device identified based on the external device information thus transmitting the various kinds of information to the external device that has input the various kinds of information to the text box A2 even when a text input to the text box A2 is related to privacy such as a password.

As explained heretofore, according to the first to fourth embodiments, when each of the information processing devices 100, 500, 600, and 700 is connected with the external devices 200 and 300 in plurality and the input operation of a text to each of the text boxes displayed on the information processing devices 100, 500, 600, and 700 is performed, the invasion of privacy or the disclosure of individual information can be suppressed.

In the present embodiments, examples that apply the information processing devices 100, 500, 600, and 700 to digital televisions are explained. However, the present embodiments are not limited to these examples, and can also be applied to a hard disk drive (HDD) recorder or the like.

Furthermore, a computer program executed in each of the information processing devices 100, 500, 600, and 700 of the present embodiments is provided in the form of a read only memory (ROM) or the like into which the program is integrated in advance. The program executed in each of the information processing devices 100, 500, 600, and 700 of the present embodiments may be provided in the form of a storage medium capable of being read by the computer; that is, a compact disc-read only memory (CD-ROM), a flexible disk (FD), a compact disk recordable (CD-R), a digital versatile disk (DVD), or the like in which the program is stored in an installable or executable file.

In addition, the program executed in each of the information processing devices 100, 500, 600, and 700 of the present embodiments may be stored on the computer connected to a network such as the Internet and provided by downloading via the network. The program executed in each of the information processing devices 100, 500, 600, and 700 of the present embodiments may be provided or distributed via a network such as the Internet.

The program executed in each of the information processing devices 100, 500, 600, and 700 of the present embodiments is constituted of modules including the above-mentioned respective modules (the basic operation module 101, the external operation module 104, the display controllers 102, 602, and 702, the transmitter 105, the determination modules 106, 506, and 606, the text box attribute acquisition module 607, and the like). As actual hardware, a central processing unit (CPU) reads out the program from the above-mentioned ROM to execute the program, and thus the above-mentioned respective modules are loaded on a main memory, and the basic operation module 101, the external operation module 104, the display controllers 102, 602, and 702, the transmitter 105, the determination modules 106, 506, and 606, the text box attribute acquisition module 607, and the like are generated on the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device (100, 500, 600, 700) comprising:
a display controller (102, 602, 702) configured to display a screen (A1) comprising input regions (A2) to which information is capable of being input, on a display (A);
a transmitter (105) configured to transmit the information input to at least one of the input regions (A2) to an external device (200, 300);
a prohibition module (106, 506, 606) configured to acquire attribute information indicating display or non-display of the information in the input region (A2) for each of the input regions (A2) and prohibit, when the attribute information of the input region (A2) to which the information to be transmitted is input indicates the non-display of the information, transmission of the information to the external device (200, 300).

2. The information processing device (100, 500, 600, 700) of Claim 1, further comprising: a storage (507) configured to store therein the input region (A2) and the attribute information in a manner associated with each other.

3. The information processing device (100, 500, 600, 700) of Claim 1 or 2, wherein
the display controller (102, 602, 702) is configured to display the screen (A1) on the display (A) in accordance with a structured document comprising a tag that indicates an attribute of the input region (A2), and
the prohibition module (106, 506, 606) is configured to acquire the attribute information based on the tag comprised in the structured document.

4. The information processing device (100, 500, 600, 700) of one of Claims 1 to 3, wherein
the display controller (102, 602, 702) is configured to display the screen (A1) on the display (A) in accordance with a structured document in which a display content of the screen (A1) is described, and
the prohibition module (106, 506, 606) is configured to acquire the attribute information based on a display content in a vicinity of the input region (A2), the display content being described in the structured document.

5. The information processing device (100, 500, 600, 700) of one of Claims 1 to 4, wherein
the display controller (102, 602, 702) is configured to change a display mode of the input region (A2) to which the information to be transmitted is input, and
the prohibition module (106, 506, 606) is configured to acquire the attribute information of the input region (A2) whose display mode is changed.

6. The information processing device (100, 500, 600, 700) of one of Claims 1 to 5, further comprising:
a specific storage (707) configured to store therein external device information identifying the external device (200, 300) that has input the information, for each of the input regions (A2), wherein
the prohibition module (106, 506, 606) is configured to cancel the prohibition of the transmission of the information to the external device (200, 300) identified based on the external device information.

7. An information processing method comprising:
displaying a screen (A1) comprising input regions (A2) to which information is capable of being input, on a display (A);
transmitting the information input to at least one of the input regions (A2) to an external device (200, 300); and
acquiring attribute information indicating display or non-display of the information in the input region (A2) for each of the input regions (A2) to prohibit, when the attribute information of the input region (A2) to which the information to be transmitted is input indicates the non-display of the information, transmission of the information to the external device (200, 300).
